# EUROPEAN PATENT SPECIFICATION

(11) **EP 2 420 334 B1**
(45) Date of publication and mention of the grant of the patent: **08.07.2015**
(21) Application number: 09830524.6
(22) Date of filing: 12.10.2009
(51) Int. Cl.: B41M 5/025, A47J 27/00, A47J 36/02, B21D 51/18, B21D 22/00, B05D 1/36, B05D 7/14, B41J 3/413, B41M 1/28

(54) **METHOD FOR MANUFACTURING COOKING VESSEL ON WHICH PICTURE IN MORE THAN ONE COLOUR CAN BE PRINTED, AND JIG FOR A PRINTING DEVICE USED IN THE SAME**
VERFAHREN ZUR HERSTELLUNG EINES KOCHGEFÄSSES MIT MEHRFARBIGEM BILDAUFDRUCK UND SCHABLONE FÜR EINE DAFÜR VERWENDETE DRUCKVORRICHTUNG
PROCÉDÉ POUR LA PRODUCTION D'UN RÉCIPIENT DE CUISSON POUVANT ÊTRE IMPRIMÉ EN PLUS D'UNE COULEUR, ET GABARIT POUR DISPOSITIF D'IMPRESSION UTILISÉ AVEC LEDIT

(30) Priority: 04.12.2008 KR 20080122339; 24.09.2009 KR 20090090658
(43) Date of publication of application: 22.02.2012
(73) Proprietor: Son, Jae Bong, Daegu 706-034 (KR); Lim, Ha Bai, Daegu 704-751 (KR)
(72) Inventor: Son, Jae Bong, Daegu 706-034 (KR); Lim, Ha Bai, Daegu 704-751 (KR)
(74) Representative: Vossius & Partner Patentanwälte Rechtsanwälte mbB
(86) International application number: PCT/KR2009/005831
(87) International publication number: WO 2010/064786

(56) References cited:
- EP-A1- 1 055 524
- EP-A2- 1 521 265
- WO-A1-93/04872
- DE-A1- 2 424 949
- DE-A1- 2 914 704
- JP-A- 8 103 839
- JP-A- 2002 143 933
- JP-A- 2005 349 441
- KR-A- 20040 105 293

## Description

### BACKGROUND OF THE INVENTION

### Field of the Invention

The present invention relates to a method for manufacturing a cooking vessel with multi-colored printing and a jig for a printer used for the multi-colored printing, and more particularly, to a method for manufacturing a cooking vessel with multi-colored printing, which can conveniently manufacture cooking vessels with various colors by easily printing an image of at least two colors on the cooking vessels and a jig for a printer used for the multi-colored printing.

### Background Art

In general, a method for manufacturing a cooking vessel includes the steps of blanking a metal plate to make a metal disk and drawing a metal plate by a press.

Moreover, cooking vessel can be manufactured by die casting that melts a material such as aluminum to form a melted-alloy solution, injects the melted-alloy solution into a cast, and casts the cooking vessel.

After the cooking vessel is manufactured through the above method, an image is printed on the external surface of the cooking vessel. In order to print an image on the cooking vessel, first the metal disk which will be processed into a cooking vessel is made by the blanking process.

After the metal disk is made by the blanking process, the metal disk is pressed by the press through the drawing process to make it into the cooking vessel, and then, an image is printed on the external surface of the cooking vessel.

In order to print an image on the external surface of the finished cooking vessel, a screen plate having an image is put on the metal disk, and then, screen printing is applied by hand using a printing roller.

As described above, when the screen printing is applied by hand, there is no problem in that an image with a single color are printed, but there are many problems in that an image with at least two colors is printed.

That is, in order to print an image with at least two colors, a process of printing an image of one coat of one color, drying the image at high temperature, and then adding an image of one coat of another color is repeated, and hence, working property is bad due to many processes, and productivity is deteriorated since drying the image is very time consuming, and finally, a manufacturing cost of the cooking vessel is increased.

Furthermore, in the case of the cooking vessel finished through the drawing process or the cooking vessel manufactured through the aluminum die-casting, after the cooking vessel is manufactured, the cooking vessel is completely manufactured by the method that a worker draws an image on the external surface of the cooking vessel by hand and treats it by heating, but the method has several problems in that it takes much time to draw the image, and in that it is economically infeasible because it requires manpower of a skilled handicraftsman who draws a picture or an image well.

DE 29 14 704 A1 describes a process of printing substrates, such as metal plates. EP 1 521 265 A2 discloses a disc holding mechanism for an optical storage disc.

### SUMMARY OF THE INVENTION

Accordingly, the present invention has been made to solve the above-mentioned problems occurring in the prior arts, and it is an object of the present invention to provide a method for manufacturing a cooking vessel with multi-colored printing, which can manufacture a cooking vessel with an elaborate image of at least two colors through a simple process, and a jig for a printer used for multi-colored printing to provide a cooking vessel of high quality with an elaborate image of multiple colors at a low price, thereby enhancing the international competitiveness and economic feasibility by widening a choice of vessels having various colors and images according to consumers' tastes. This object is achieved with the features of claim 1.

To accomplish the above object, according to the present invention, there is provided a method for manufacturing a cooking vessel with multi-colored printing including the steps of: coating the surface of a metal plate, which will be the external surface of the cooking vessel, with heat-resisting paint and coating the surface of the metal plate, which will be the internal surface of the cooking vessel, with Teflon and drying the coated metal plate; inserting the metal plate coated with the heat-resisting paint and Teflon into a printer, setting the printer in such a fashion that images and colors of a film previously mounted in the printer are printed on the surface of the metal disk coated with the heat-resisting paint; ejecting the metal disk when the images with at least two colors are printed on the metal disk and heat-treating the metal disk in such a way that the images are embedded in the metal disk; and conveying the metal disk to a pressing process when the images are embedded in the metal disk through the heat treatment and drawing the metal disk to mold the metal disk into a cooking vessel.

The printer comprises a jig including: a fixing panel seated and fixed on a seating part, on which a workpiece is seated, in the printer, the fixing panel having a plurality of seating recesses for seating a plurality of metal disks thereon; and setting means disposed between the fixing panel and the metal disks for preventing a movement of the metal disks inserted into the seating recesses during printing and for making insertion and ejection of the metal disks easy.

As described above, the present invention can conveniently manufacture cooking vessels having at least two colors and reduce manufacturing prices because the cooking vessels are manufactured through a drawing process by a press after images with various colors are printed on the metal disks and the metal disks are heat-treated. Moreover, because the present invention can provide various kinds of cooking vessels on which various colors and elaborate images are printed, it allows consumers to choose the cooking vessels according to their tastes. Furthermore, the present invention enhances international competitiveness because it can provide cooking vessels of high quality at low prices.

### BRIEF DESCRIPTION OF THE DRAWINGS

The above and other objects, features and advantages of the present invention will be apparent from the following detailed description of the preferred embodiments of the invention in conjunction with the accompanying drawings, in which:
FIG. 1 is a flow chart showing a method for manufacturing a cooking vessel with multi-colored printing according to the present invention;
FIG. 2 is a front view showing a state where a jig is mounted on a printer used in the present invention;
FIG. 3 is a partially perspective view showing a state where the jig of FIG. 1 is mounted;
FIG. 4 is a perspective view showing the jig for the printer of FIG. 3;
FIG. 5 is a sectional view showing a state where a metal plate to be processed into a cooking vessel is inserted into the jig in FIG. 4;
FIG. 6 is a sectional view showing a state where the metal plate is inserted into the jig in FIG. 5;
FIG. 7 is a sectional view showing a state where elastic means is not mounted on a locking member in FIG. 5;
FIG. 8 is a sectional view showing a state where the locking member is mounted on a jig body in FIG. 4;
FIG. 9 is a perspective view showing another example of the locking means mounted on the jig for the printer according to the present invention;
FIG. 10 is a schematic plan view showing a state where a sliding member moves from a guide member to fix the metal plate in FIG. 9;
FIG. 11 is a schematic plan view showing a state where the sliding member moves to release the metal plate in FIG. 10;
FIG. 12 is a sectional view showing a joined state of the sliding member and the guide member;
FIG. 13 is a perspective view showing a further example of the locking means mounted on the jig for the printer;
FIG. 14 is an exploded perspective view showing a jig for a printer according to another example;
FIG. 15 is a plan view showing a fixed state of the metal plate in FIG. 14; and
FIG. 16 is a plan view showing a state where metal plates of different sizes are fixed in FIG. 15.

### DETAILED DESCRIPTION OF THE PREFERRED EMBODIMENT

Reference will be now made in detail to the preferred embodiment of the present invention with reference to the attached drawings.

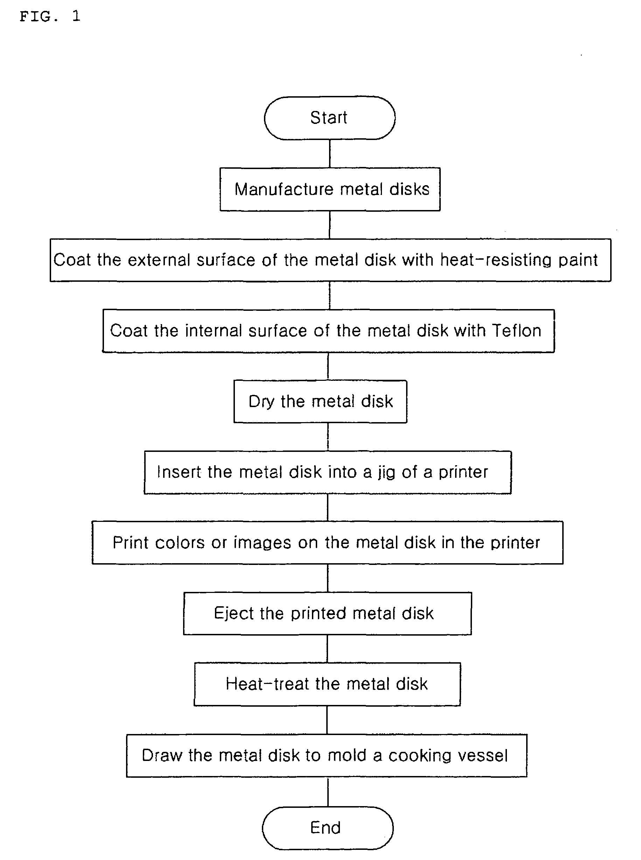

FIG. 1 is a flow chart showing a method for manufacturing a cooking vessel with multi-colored printing according to the present invention.

### First process (Material preparing process)

A metal disk, which is a material for a cooking vessel, is cut to have a predetermined size through a blanking process by a press, and then, is washed to remove foreign matters stuck on the surface of the metal plate during the metal disk process and is dried.

### Second process (Underpainting process)

The surface of the metal plate, which was manufactured in the first process, to become the external surface of the cooking vessel is coated with heat-resisting paint, and the surface of the metal plate to become the internal surface of the cooking vessel is coated with Teflon, and then, the metal plate is dried at high temperature.

### Third process (Printing process)

The metal disk, which was coated with heat-resisting paint and coated with Teflon in the second process is dried at a predetermined temperature in such a fashion that the heat-resisting paint and Teflon can be stuck on the surface of the metal disk.

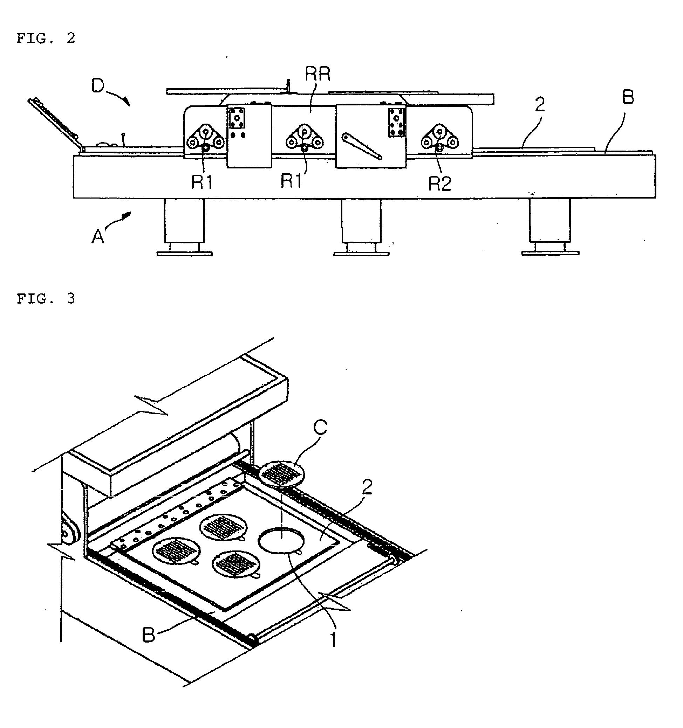

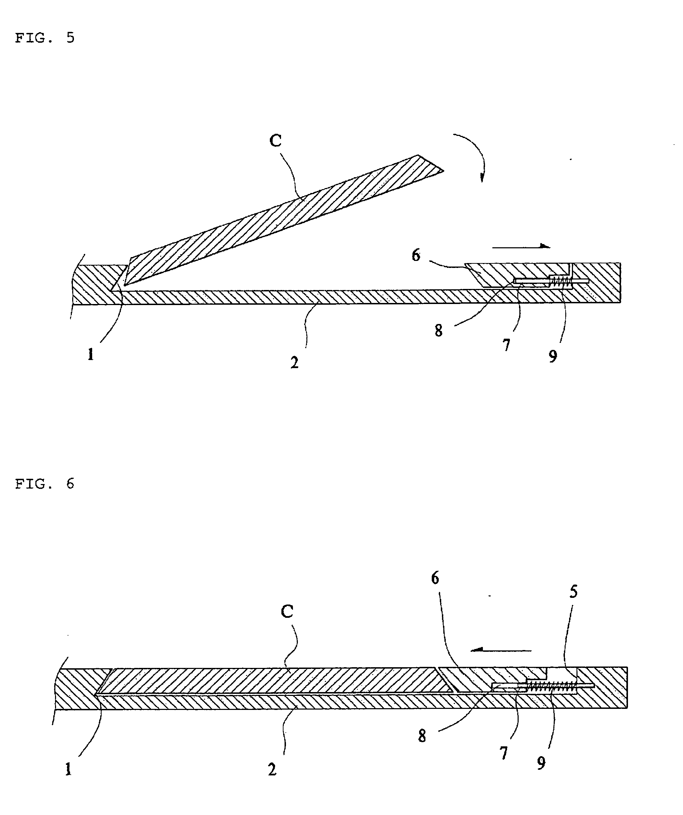

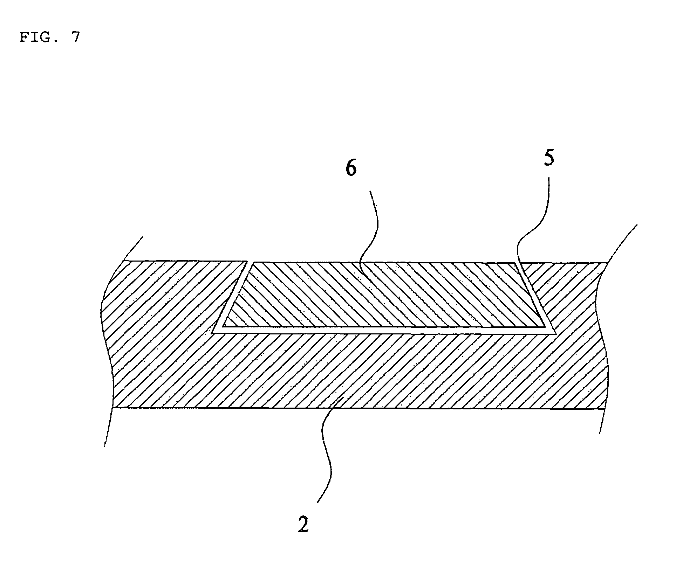

In the above state, an elaborate image with at least two colors is printed onto the metal disk by a printer illustrated in FIGS. 2 to 16, and in this instance, the image is printed on an outer portion of the metal disk where the heat-resisting paint is coated.

Of course, the printer used in the present invention is a general or common printer which can print multiple colors, and in detail, a film having an image with multiple colors is fixed to a film fixing part 2 of the printer A.

In the above state, ink is coated on the film on which the image with multiple colors is designed, through ink rollers.

Moreover, the ink coated on the film having the image is moved to a printing roller, the printing roller prints the image on the metal disk put on a metal plate fixing panel mounted on a printing part. In this instance, the metal disk fixing panel 2 has a jig suitable for the present invention, and the jig will be described later in detail.

### Fourth process (Heat treatment process)

When at least two colors or images are printed on the upper surface of the metal disk painted with the heat-resisting paint in the third process, the metal disk is put into a heat treatment furnace to be dried and treated by heating.

The drying and heat treatment process in the heat treatment furnace is carried out at high temperature ranging from 200°C to 260°C for ten minutes. In this instance, in case of general ink for screen printing, the ink is easily come off because the ink is not completely embedded into the metal disk when temperature is below 200°C, but is changed in properties or burns when temperature is too high, namely, above 260°C, and hence, printing becomes bad.

### Fifth process (Press drawing process)

When the metal disk printed in the fourth process is heat-treated, after the metal disk is conveyed to a process for a pressing process, the metal disk is put into a press to be pressed into a form of a cooking vessel through a drawing process.

After the drawing process by the press, the metal disk is manufactured into the form of the cooking vessel, and then, the cooking vessel is completed through a general post-process which is carried out to make a cooking vessel after the drawing process.

As described above, when the cooking vessel is manufactured, because various colors and images are printed on the metal disk in an original disk condition before the drawing process, the cooking vessel can have various colors and images, so that cooking vessels with various and beautiful colors and images according to consumers' tastes can be easily manufactured.

Here, the multiple colors and elaborate images formed on the external surface of the cooking vessel manufactured through the above manufacturing method are heat-treated in the heat treatment furnace not to be come off, so that the cooking vessel manufactured through the manufacturing method according to the present invention can be used for a long time in a state where the colors and images are not come off.

FIGS. 2 to 16 illustrate the jig for the printer used in the present invention, and the jig has a structure to print images when the metal disk is put into the printer which provides a multi-colored printing.

The jig includes: fixing panel 2 seated and fixed on a seating part B, on which a workpiece is seated, in the printer A, which provides the multi-colored printing, the fixing panel 2 having a plurality of seating recesses 1 for seating a plurality of metal disks C thereon; and setting means disposed between the fixing panel 2 and the metal disks C for preventing a movement of the metal disks C inserted into the seating recesses 1 during printing and for making insertion and ejection of the metal disks easy.

In other words, the setting means serves to fix the metal disks C to the fixing panel 2 and to set the positions of the metal disks C for printing, and hence, the metal disks C can be kept at their positions by the setting means, so that images can be exactly aligned at their printing position during the multi-colored printing.

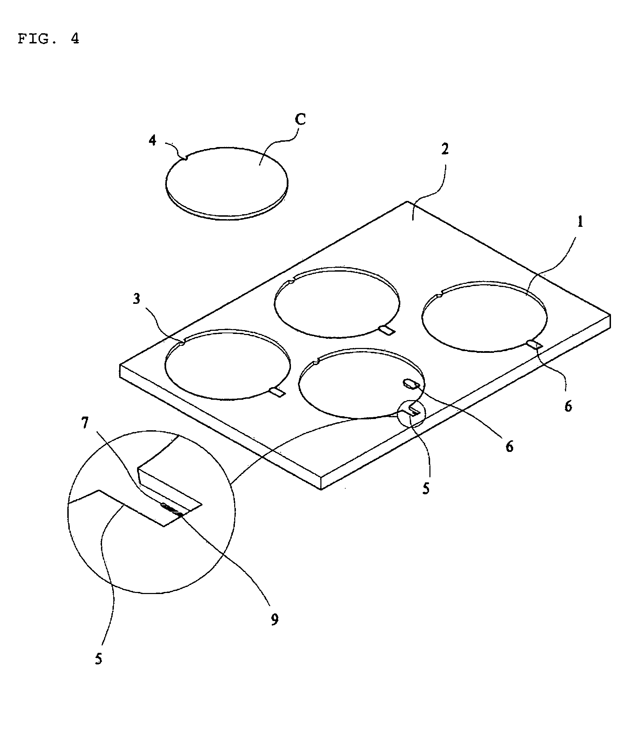

As shown in FIGS. 4, 5, 6 and 7, the setting means includes: a protrusion 3 protrudingly formed on the inner side of each of the seating recesses 1 and downwardly tapered; an insertion slot 4 formed on each of the metal disks C in such a fashion as to be reversely tapered to prevent a separation of the protrusion 3 inserted into the insertion slot 4; and locking means formed at a position opposed to the protrusion 3 and having a structure that the upper face of the metal disk C is caught to the seating recess 1 after the metal disk C is inserted into the seating recess 1.

The locking means according to an example includes: a tapered guide groove 5 communicatingly formed on the seating recess 1 and having a tapered side wall; and a sliding member 6 inserted into the guide groove 5 in such a way as to freely move, the sliding member 6 having a structure that the sliding member 6 interlocks with the tapered side wall of the guide groove not to be separated upwardly and the upper face of the metal disk C is caught to a front portion of the sliding member 6.

Particularly, the sliding member 6 has elastic means to support the sliding member 6 by elasticity, and the elastic means includes: a guide bar 7 mounted on the guide groove 5; a guide slot 8 formed at the rear of the sliding member 6 in such a fashion that the guide bar 7 is inserted into the guide slot 8 and moves inside the guide slot 8; and a spring 9 mounted for pushing the sliding member 6 in a state where the guide bar 7 is inserted into the guide slot 8.

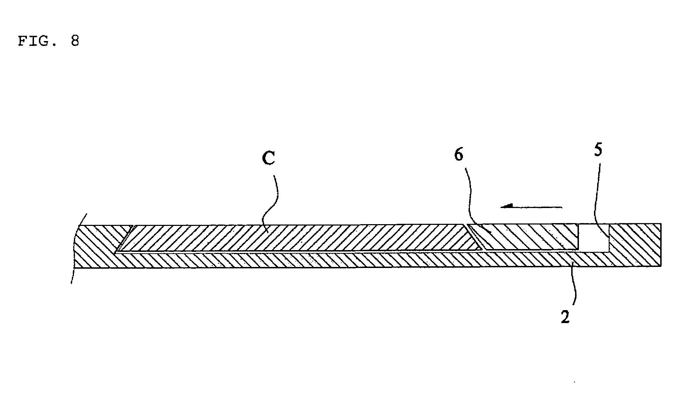

Even though only the sliding member is mounted without the elastic means as shown in FIG. 8, it can fix the metal disk C with the same effect, but it is inconvenient because a worker has to push the sliding member 6 with the hand.

Of course, the printer illustrated in FIG. 2, as a general structure, further includes: an input part D formed at a position opposed to the seating part B, on which the fixing panel 2 is seated, so that a pre-sensitized plate (not shown) on which an image with multiple colors is formed is inserted into the input part D; and a printing part RR having two ink rollers R1 for coating the pre-sensitized plate with ink with different colors and a printing roller R2 for printing the image on the metal disk C.

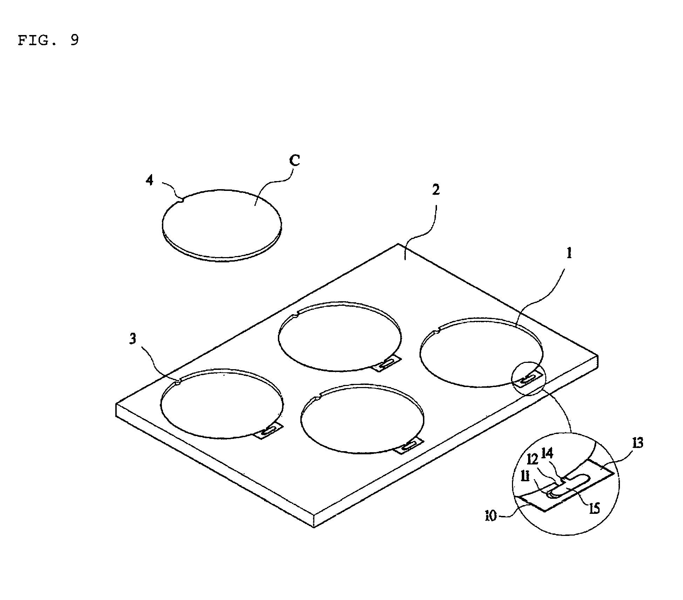

FIGS. 9, 10 and 11 illustrate another example of the locking means according to the present invention. In the drawings, the locking means includes: a cut portion 10 communicatingly formed on the seating recess 1 of the fixing panel 2; a guide member 13 fixed to the cut portion 10 and having an oblong movement hole 11 formed in a tangential direction of the seating recess 1 and a movement hole 11 of a predetermined length which communicates with the seating recess 1; and a sliding member 15 inserted into the movement hole 11 of the guide member 13 in such a way as to freely move inside the movement hole 11 and having a fixing part 14 that outwardly protrudes from the guide member 13 to fix the upper face of the metal disk C when it is moved to one side but does not protrude out to release the metal disk C when it is moved to the other side.

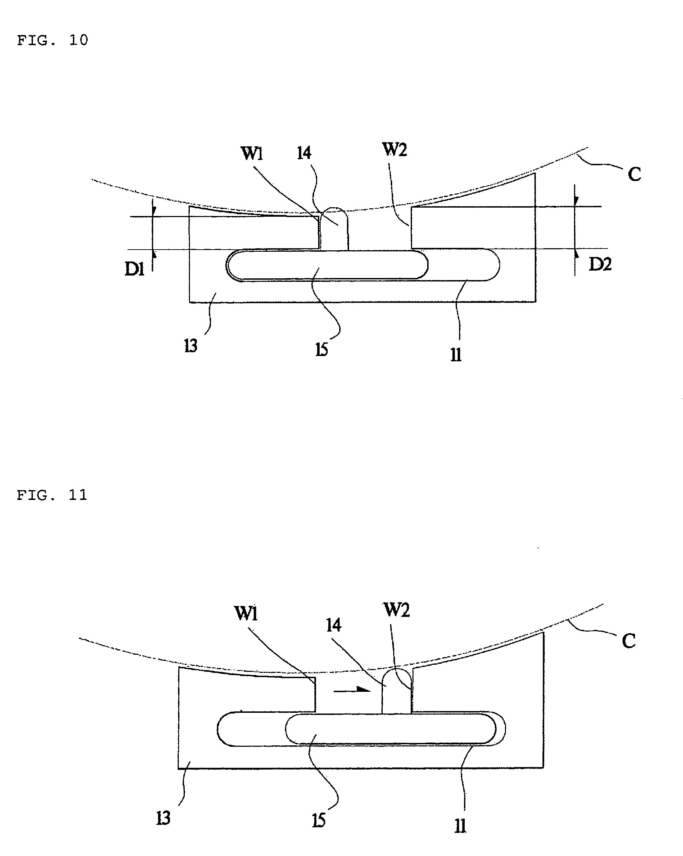

That is, as illustrated in FIG. 10, because a length D1 of a wall W1 of one side of the movement hole of the guide member 13 is longer than a length D2 of a wall W2 of the other side, the sliding member 15 protrudes out while moving to one side, so that the metal disk C can be fixed. However, as illustrated in FIG. 11, when the sliding member 15 moves to the wall W2 of the other side, the metal disk C is not fixed because the sliding member 15 does not protrude out.

Here, when the guide member 13 is mounted eccentrically from a central line of the seating recess 1 after the front end of the guide member 13 is formed in such a fashion as to have the same curvature as the seating recess 1, the length of the wall W1 of one side of the movement hole 11 is different from that of the wall W2 of the other side, so that the fixing part 14 may protrude out or may not protrude out through the guide member 13 when the sliding member 15 is moved.

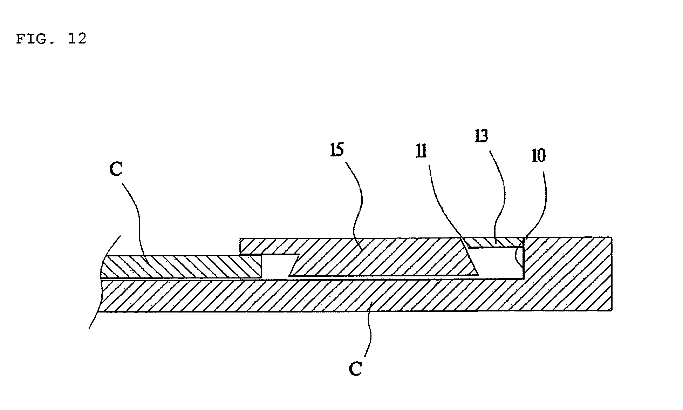

The sliding member 15 is not separated from the guide member 13, and as illustrated in FIG. 12, if an outer face of the sliding member 15 and a contact portion of the guide member 13 are tapered, the sliding member 15 is not separated from the guide member 13 because it is caught to the guide member 13.

Of course, if the front end portion of the guide member 13 does not have the same curvature as the seating recess 1 and both side walls W1 and W2 of the movement hole 11 are different in length from each other, it may provide the same effects as the above.

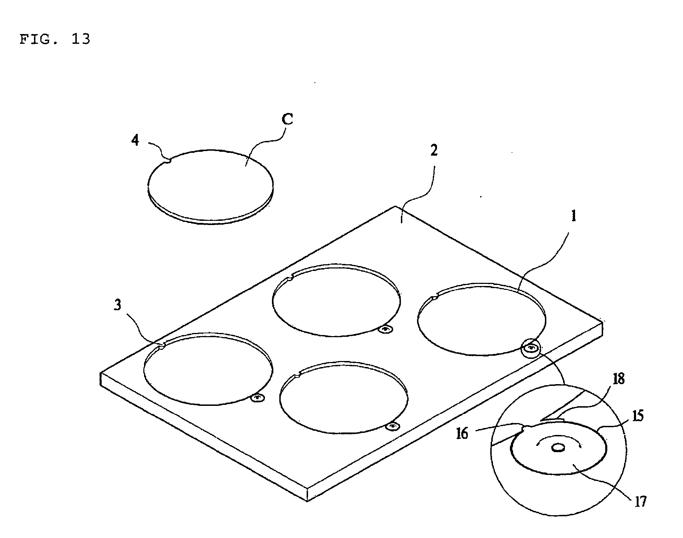

FIG. 13 illustrates another example of the locking means, and the locking means includes: a mounting part 15 communicatingly formed in the seating recess 1 of the fixing panel 2 and cut into a round form; a rotary locker 17 rotatably fixed on the mounting part 15 by a shaft and having a protrusion 16 protruding to the inner face of the seating recess 1; and a movement hole mounted for preventing that the rotary locker 17 is caught to the mounting part 15 when the rotary locker 17 is rotated, so that the metal disk C is fixed or released while the rotary locker 17 is rotated.

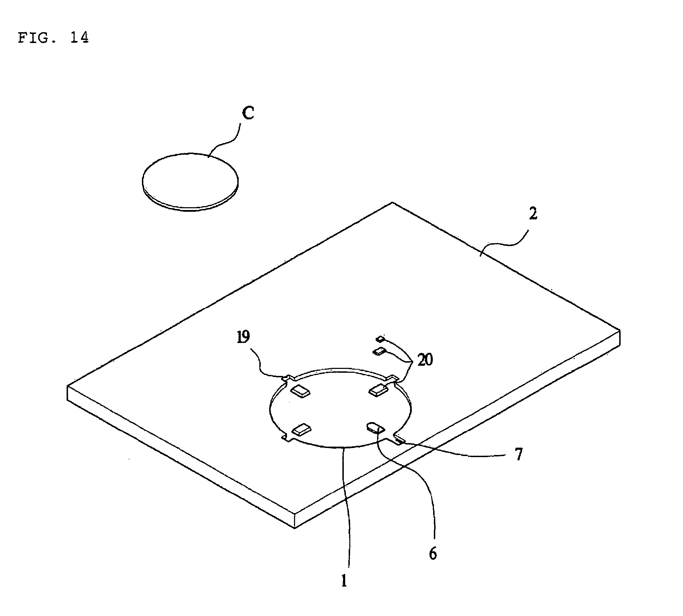

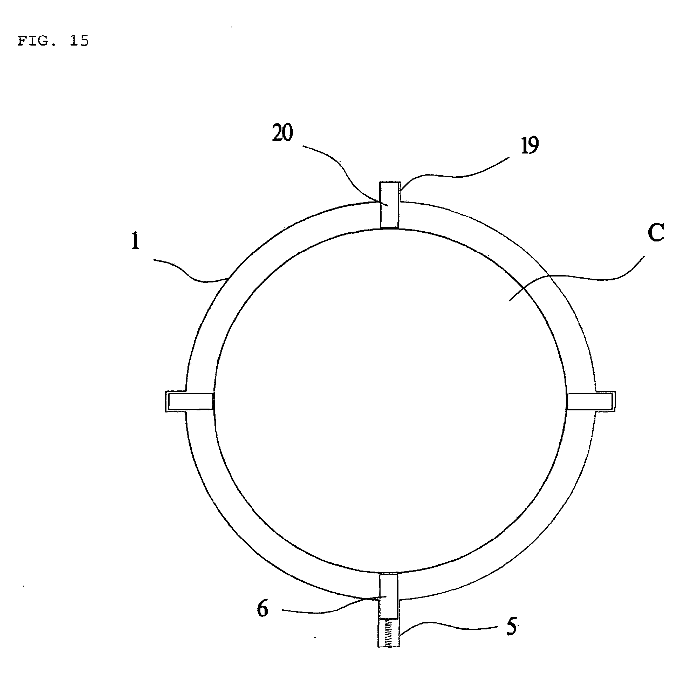

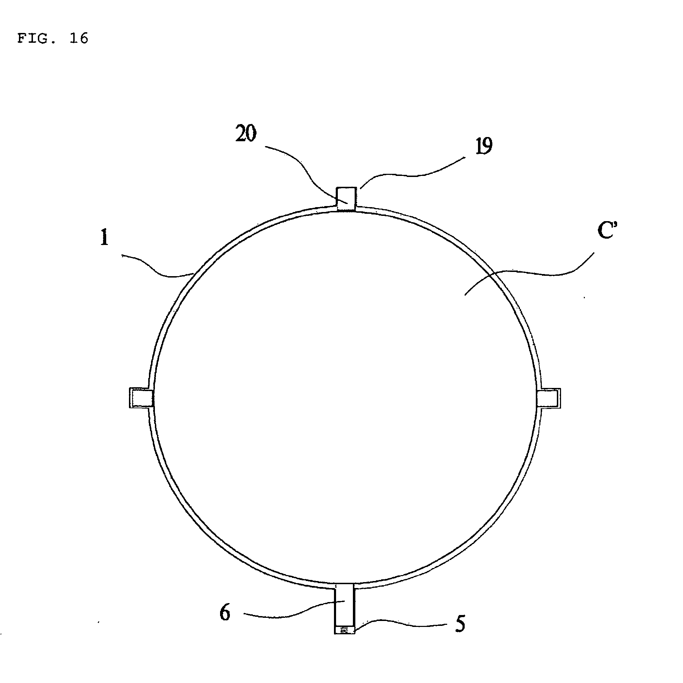

FIG. 14 is an exploded perspective view showing a jig for a printer according to another example, FIG. 15 is a plan view showing a fixed state of the metal plate in FIG. 14, and FIG. 16 is a plan view showing a state where metal plates of different sizes are fixed in FIG. 15.

The jig is to fix various kinds of the fixing panels C with different sizes, and includes: a sliding member 6 mounted on the fixing panel 2 in such a fashion as to be elastically moved; jig holes 19 arranged to divide the seating recess 1 in four parts together with the sliding member 6; and fixing blocks 20 respectively inserted into the jig holes 19 to locate the metal disk C or C" at the center of the seating recess 1, the fixing blocks 20 having various sizes so as to be replaced corresponding to sizes of the metal disks C or C.

That is, the sliding member 6 is inserted into and goes out from the guide groove 5 by the spring 9, and hence, metal disks C or C" of various sizes can be fixed when the fixing blocks 20 are replaced according to the sizes of the metal disks.

Of course, if the number of the jig holes 19 may be set in such a way as to support the metal disks stably, it may have the same effect.

## Claims

1. A method for manufacturing a cooking vessel with multi-colored printing comprising the steps of:
coating the surface of a metal plate, which will be the external surface of the cooking vessel, with heat-resisting paint and coating the surface of the metal plate, which will be the internal surface of the cooking vessel, with Teflon and drying the coated metal plate;
inserting the metal plate coated with the heat-resisting paint and Teflon into a printer (A), setting the printer (A) in such a fashion that images and colors of a film previously mounted in the printer (A) are printed on the surface of the metal disk (C) coated with the heat-resisting paint;
ejecting the metal disk (C) when the images with at least two colors are printed on the metal disk (C) and heat-treating the metal disk (C) in such a way that the images are embedded in the metal disk (C); and
conveying the metal disk (C) to a pressing process when the images are embedded in the metal disk (C) through the heat treatment and drawing the metal disk (C) to mold the metal disk (C) into a cooking vessel,
wherein the printer (A) comprises a jig comprising:
a fixing panel (2) seated and fixed on a seating part (B), on which a workpiece is seated, in the printer (A), the fixing panel (2) having a plurality of seating recesses (1) for seating a plurality of metal disks (C) thereon; and
setting means disposed between the fixing panel (2) and the metal disks (C) for preventing a movement of the metal disks (C) inserted into the seating recesses (1) during printing and for making insertion and ejection of the metal disks (C) easy,
wherein the setting means comprises:
a protrusion (3) protrudingly formed on the inner face of each of the seating recesses (1) and downwardly tapered;
an insertion slot (4) formed on each of the metal disks (C) in such a fashion as to be reversely tapered to prevent a separation of the protrusion (3) inserted into the insertion slot (4); and
locking means formed at a position opposed to the protrusion (3) and having a structure that the upper face of the metal disk (C) is caught to the seating recess (1) after the metal disk (C) is inserted into the seating recess (1), and
wherein the locking means comprises:
a cut portion (10) communicatingly formed on the seating recess (1) of the fixing panel (2);
a guide member (13) fixed to the cut portion (10) and having an oblong movement hole (11) formed in a tangential direction of the seating recess (1) and a movement hole of a predetermined length which communicates with the seating recess (1) and has both side walls (W1, W2) different in length from each other; and
a sliding member (15) inserted into the oblong movement hole (11) of the guide member (13) in such a way as to freely move inside the oblong movement hole (11), the sliding member (15) having a fixing part (14) protrudingly formed in such a way as to fix or release the upper face of the metal disk (C) while moving between the side walls (W1, W2) of the movement hole.

2. The manufacturing method according to claim 1, wherein in the heat treatment process, the metal disk is heat-treated at temperature ranging from 200°C to 260°C for ten minutes.

3. The manufacturing method according to claim 1, wherein an outer face of the sliding member (15) and a contact portion of the guide member (13) are tapered and interlock with each other, so that the sliding member (15) is not separated from the guide member (13) because it is caught to the guide member (13).

## Patentansprüche

1. Verfahren zum Herstellen eines Kochgefäßes mit einem mehrfarbigen Aufdruck, das die Schritte aufweist:
Beschichten der Oberfläche einer Metallplatte, die die äußere Oberfläche des Kochgefäßes sein wird, mit einem wärmebeständigen Anstrich und Beschichten der Oberfläche der Metallplatte, die die innere Oberfläche des Kochgefäßes sein wird, mit Teflon und
Trocknen der beschichteten Metallplatte;
Einsetzen der mit dem wärmebeständigen Anstrich und Teflon beschichteten Metallplatte in einen Drucker (A), Versetzen des Druckers (A) in einen solchen Zustand, dass Bilder und Farben eines Films, der vorher im Drucker (A) angebracht wird, auf die Oberfläche der mit dem wärmebeständigen Anstrich beschichteten Metallplatte (C) gedruckt werden;
Auswerfen der Metallplatte (C), wenn die Bilder mit mindestens zwei Farben auf die Metallplatte (C) gedruckt worden sind, und Wärmebehandeln der Metallplatte (C) auf eine solche Weise, dass die Bilder in die Metallplatte (C) eingebettet werden; und
Befördern der Metallplatte (C) zu einem Pressprozess, wenn die Bilder in die Metallplatte (C) durch die Wärmebehandlung eingebettet worden sind, und Ziehen der Metallplatte (C), um die Metallplatte (C) zu einem Kochgefäß zu formen,
wobei der Drucker (A) eine Schablone aufweist, die aufweist:
eine Befestigungsplatte (2), die auf ein Aufnahmeteil (B) gesetzt und an ihm befestigt ist, auf das ein Werkstück gesetzt wird, im Drucker (A), wobei die Befestigungsplatte (2) eine Vielzahl von Aufnahmeaussparungen (1) zum Setzen einer Vielzahl von Metallplatten (C) darauf aufweist; und
Feststellmittel, die zum Verhindern einer Bewegung der in die Aufnahmeaussparungen (1) eingesetzten Metallplatten (C) während des Druckens und zum Erleichtern des Einsetzens und Auswerfens der Metallplatten (C) zwischen der Befestigungsplatte (2) und den Metallplatten (C) angeordnet sind,
wobei die Feststellmittel aufweisen:
einen Vorsprung (3) der vorspringend an der Innenseite jeder der Aufnahmeaussparungen (1) ausgebildet ist und nach unten verjüngt ist;
ein Einsatzschlitz (4), der an jeder der Metallplatten (C) in einer solchen Weise ausgebildet ist, dass er umgekehrt verjüngt ist, um eine Trennung des in den Einsatzschlitz (4) eingesetzten Vorsprungs (3) zu verhindern; und
Arretierungsmittel, die an einer Position ausgebildet sind, die dem Vorsprung (3) gegenüberliegt, und die eine solche Struktur aufweisen, dass die Oberseite der Metallplatte (C) an der Aufnahmeaussparung (1) erfasst wird, nachdem die Metallplatte (C) in die Aufnahmeaussparung (1) eingesetzt worden ist, und
wobei die Arretierungsmittel aufweisen:
einen Ausnehmungsabschnitt (10), der verbindend an der Aufnahmeaussparung (1) der Befestigungsplatte (2) ausgebildet ist;
ein Führungselement (13), das am Ausnehmungsabschnitt (10) befestigt ist und ein Bewegungslangloch (11), das in eine tangentiale Richtung der Aufnahmeaussparung (1) ausgebildet ist, und ein Bewegungsloch einer vorgegebenen Länge aufweist, das mit der Aufnahmeaussparung (1) in Verbindung steht und dessen beide Seitenwände (W1, W2) sich in ihrer Länge voneinander unterscheiden; und
ein Gleitelement (15), das in das Bewegungslangloch (11) des Führungselements (13) in einer solchen Weise eingesetzt ist, dass es sich innerhalb des Bewegungslanglochs (11) frei bewegen kann, wobei das Gleitelement (15) ein Fixierungsteil (14) aufweist, das einer solchen Weise vorspringend ausgebildet ist, dass es die Oberseite der Metallplatte (C) fixiert oder löst, während es sich zwischen den Seitenwänden (W1, W2) des Bewegungslochs bewegt.

2. Herstellungsverfahren nach Anspruch 1, wobei im Wärmebehandlungsprozess die Metallplatte mit einer Temperatur, die von 200°C bis 260°C reicht, für zehn Minuten wärmebehandelt wird.

3. Herstellungsverfahren nach Anspruch 1, wobei eine Außenseite des Gleitelements (15) und ein Kontaktabschnitt der Führungselements (13) verjüngt sind und gegenseitig ineinandergreifen, so dass das Gleitelement (15) nicht vom Führungselement (13) getrennt wird, da es am Führungselement (13) erfasst wird.

## Revendications

1. Procédé de fabrication d'un récipient de cuisson avec une impression polychrome, comprenant les étapes suivantes :
revêtement de la surface d'une plaque métallique qui sera la surface externe du récipient de cuisson avec une peinture hautement résistante et revêtement de la surface de la plaque métallique qui sera la surface externe du récipient de cuisson avec du Téflon, et séchage de la plaque métallique revêtue ;
insertion de la plaque métallique revêtue de la peinture hautement résistante et du Téflon dans une imprimante (A), réglage de l'imprimante (A) de telle manière que les images et les couleurs d'un film préalablement mises en place dans l'imprimante (A) sont imprimées sur la surface du disque métallique (C) revêtu de la peinture hautement résistante ;
éjection du disque métallique (C) quand les images ayant au moins deux couleurs sont imprimées sur le disque métallique (C), et traitement thermique du disque métallique (C) de manière à incorporer les images dans le disque métallique (C) ; et
transport du disque métallique (C) vers une station de pressage après incorporation des images dans le disque métallique (C) par traitement thermique, et extraction du disque métallique (C) pour former le disque métallique (C) en récipient de cuisson par moulage,
l'imprimante (A) comportant un gabarit avec :
un panneau de fixation (2) monté et fixé sur une pièce de montage (B) de l'imprimante (A) sur laquelle une pièce est disposée, ledit panneau de fixation (2) présentant une pluralité de logements (1) pour la mise en place d'une pluralité de disques métalliques (C) ; et
un moyen de réglage prévu entre le panneau de fixation (2) et les disques métalliques (C), destiné à empêcher un déplacement des disques métalliques (C) insérés dans les logements (1) pendant l'impression, et à faciliter l'insertion et l'éjection des disques métalliques (C),
ledit moyen de réglage comprenant :
une saillie (3) formée sur la face intérieure de chacun des logements (1) et s'amincissant vers le bas ;
une fente d'insertion (4) ménagée dans chacun des disques métalliques (C) de manière à présenter un amincissement inversé pour empêcher un détachement de la saillie (3) insérée dans la fente d'insertion (4) ; et
un moyen de verrouillage formé à un emplacement opposé à la saillie (3) et dont la structure est telle que la face supérieure du disque métallique (C) est maintenue dans le logement (1) après insertion du disque métallique (C) dans le logement (1), et
ledit moyen de verrouillage comprenant :
une partie de découpe (10) adjacente au logement (1) du panneau de fixation (2) ;
un élément de guidage (13) fixé à la partie de découpe (10) et présentant un trou de translation oblong (11) formé dans une direction tangentielle au logement (1), et un trou de translation de longueur définie ouvert sur le logement (1) et présentant deux parois latérales (W1, W2) de longueurs différentes ; et
un élément coulissant (15) inséré dans le trou de translation oblong (11) de l'élément de guidage (13) de manière être librement mobile dans le trou de translation oblong (11),
ledit élément coulissant (15) présentant une pièce de blocage (14) faisant saillie de manière à bloquer ou à débloquer la face supérieure du disque métallique (C) par déplacement entre les parois latérales (W1, W2) du trou de translation.

2. Procédé de fabrication selon la revendication 1, où, lors du traitement thermique, le disque métallique est traité à une température comprise entre 200°C et 260°C pendant dix minutes.

3. Procédé de fabrication selon la revendication 1, où une face extérieure de l'élément coulissant (15) et une section de contact de l'élément de guidage (13) sont chanfreinées et s'enclenchent l'une dans l'autre, de manière à ne pas libérer l'élément coulissant (15) de l'élément de guidage (13), celui-ci restant pris dans l'élément de guidage (13).
